# EUROPEAN PATENT APPLICATION

(11) **EP 4 227 524 A1**
(43) Date of publication of application: **16.08.2023**
(21) Application number: 22155809.1
(22) Date of filing: 09.02.2022
(51) Int. Cl.: F03D 13/10

(54) **ADJUSTABLE BOLT GRIPPER**

(71) Applicant: Siemens Gamesa Renewable Energy A/S, 7330 Brande (DK)
(72) Inventor: Lykke, Jens, 7200 Grindsted (DK); Panduro, Jesper, 7184 Vandel (DK); Bakaev, Umarbek, 7430 Ikast (DK); Bramm, Michael, 6650 Brørup (DK)
(74) Representative: SGRE-Association

(57) **Abstract**

An adjustable bolt gripper (21) for gripping bolts (13) of a wind turbine (1), comprising a frame (22), a first shovel mechanism (45) to engage with a first bolt (13), a second shovel mechanism (46) to engage with a second bolt (13), wherein the first shovel mechanism (45) and the second shovel mechanism (46) are both slidably supported at the frame (22) for bringing the bolt gripper (21) from a folded status (Z1) into an unfolded status (Z2) and vice versa, and wherein the first shovel mechanism (45) and the second shovel mechanism (46) are positioned further away from each other in the unfolded status (Z2) than compared to the folded status (Z1).

Since the bolt gripper (21) can be brought from the folded status (Z1) into the unfolded status (Z2) and vice versa, it is possible to adjust the bolt gripper (21) to a specific distance (64) between two axes of symmetry (17) of two bolts (13) that are received in a magazine (63). Thus, one bolt gripper (21) can be used for different distances (64) between the axes of symmetry (17).

## Description

The present invention relates to an adjustable bolt gripper.

A wind turbine comprises a rotor connected to a generator arranged inside a nacelle. The nacelle is arranged at an upper end of a tower of the wind turbine. The tower has a plurality of tower sections that are arranged on top of each other. The tower sections comprise flanges that are connected to each other by means of bolts to form the tower. The bolts can have a length of 300 to 500 mm and a weight of up to 30 kg or even more. Due to these dimensions of the bolts, it is difficult to handle the bolts manually on a construction site where the tower must be assembled or disassembled.

It is one object of the present invention to provide an improved bolt gripper.

Accordingly, an adjustable bolt gripper for gripping bolts of a wind turbine is provided. The adjustable bolt gripper comprises a frame, a first shovel mechanism to engage with a first bolt, a second shovel mechanism to engage with a second bolt, wherein the first shovel mechanism and the second shovel mechanism are both slidably supported at the frame for bringing the bolt gripper from a folded status into an unfolded status and vice versa, and wherein the first shovel mechanism and the second shovel mechanism are positioned further away from each other in the unfolded status than compared to the folded status.

Since the bolt gripper can be brought from the folded status into the unfolded status and vice versa, it is possible to adjust the bolt gripper to a specific distance between two axes of symmetry of two bolts that are received in a magazine. Thus, one bolt gripper can be used for different distances between the axes of symmetry.

"Adjustable" in this context means that the shovel mechanisms can be moved along the frame to bring the bolt gripper from the folded status or folded position into the unfolded status or unfolded position. "Gripping" in this context means that the bolt gripper receives the bolts for transportation purposes. In particular, the bolt gripper is designed to grip two bolts at the same time. The bolt gripper can be used to receive the bolts from a magazine and to transport it to an assembly site for assembling a tower of the wind turbine or the like.

When bringing the bolt gripper from the folded status into the unfolded status, the first shovel mechanism and the second shovel mechanism move away from each other along the frame. When bringing the bolt gripper from the unfolded status into the folded status, the first shovel mechanism and the second shovel mechanism move toward each other along the frame.

Hence, "folded" in this context means that the shovel mechanisms are arranged close to each other or adjacent to each other. In contrast to that, "unfolded" in this context means that the shovel mechanisms are arranged spaced apart from each other. Thus, the bolt gripper can be telescoped. "Telescoped" in this context means that the size, in particular the width, of the bolt gripper along a width direction or x-direction can be adjusted or changed.

The shovel mechanisms are movably or slidably supported by the frame. "Slidable" or "movable" in this context means a transversal or linear movement along the frame. "Engaging" the bolt means that the shovel mechanisms are designed to encompass the bolts in such a way that the bolts can be lifted and/or transported by means of the bolt gripper without falling out of the bolt gripper. The shovel mechanisms can be named engaging mechanisms. Thus, the formulation "shovel mechanism" can be replaced by the formulation "engaging mechanism" and vice versa.

The bolt gripper has a coordinate system comprising the width direction or x-direction, a height direction or y-direction and a depth direction or z-direction. The directions are arranged perpendicular to each other. The shovel mechanisms can be moved along the x-direction. Preferably, the frame comprises a vertical profile and two horizontal profiles. The shovel mechanisms are guided along the horizontal profiles. The horizontal profiles preferably run along the x-direction.

Preferably, the bolt gripper comprises an eyelet. A hook of a winch or crane can be hooked into the eyelet for lifting the bolt gripper. The eyelet can be attached to the frame. Furthermore, the bolt gripper preferably comprises two handles that can be gripped by an operator. The handles can also be attached to the frame. A holder for holding a remote control of the winch or crane can be provided. The holder can also be attached to the frame.

According to an embodiment, the frame comprises a vertical profile, a first horizontal profile and a second horizontal profile, wherein the vertical profile is sandwiched between the first horizontal profile and the second horizontal profile, wherein the first shovel mechanism is slidably supported at the first horizontal profile, and wherein the second shovel mechanism is slidably supported at the second horizontal profile.

The vertical profile preferably runs along the y-direction. The horizontal profiles preferably run along the x-direction. Thus, the frame has an inverted T-shape. The profiles can be bolted or welded together. The profiles are preferably hollow profiles and comprise a rectangular cross section. The profiles can be made of steel or aluminum.

According to a further embodiment, the first shovel mechanism comprises a slide profile that is slidably supported at the first horizontal profile, wherein the second shovel mechanism comprises a slide profile that is slidably supported at the second horizontal profile.

Each shovel mechanism has a slide profile of its own. The slide profiles are hollow profiles. The slide profiles preferably have a rectangular cross-section. The slide profiles can be made of steel or aluminum.

According to a further embodiment, the slide profile of the first shovel mechanism receives the first horizontal profile, wherein the slide profile of the second shovel mechanism receives the second horizontal profile.

"Receiving" in this context means that horizontal profiles are arranged within the slide profiles.

According to a further embodiment, the first horizontal profile comprises a first bolt against which the slide profile of the first shovel mechanism lies in the unfolded status, wherein the second horizontal profile comprises a second bolt against which the slide profile of the second shovel mechanism lies in the unfolded status.

This prevents the shovel mechanisms from falling off the frame. Thus, the shovel mechanisms cannot be lost. The bolts can be screws or the like that are screwed into bores being provided in the horizontal profiles.

According to a further embodiment, the first shovel mechanism comprises a shovel element that is attached to the slide profile of the first shovel mechanism, wherein the second shovel mechanism comprises a shovel element that is attached to the slide profile of the second shovel mechanism.

Preferably, the shovel elements are identical. However, the shovel elements are mirror-inverted. The shovel elements can be C-shaped. The shovel elements can be named receiving elements. Hence, the formulation "shovel element" can be replaced by the formulation "receiving element" and vice versa.

According to a further embodiment, the frame comprises a support plate that is sandwiched between the shovel element of the first shovel mechanism and the shovel element of the second shovel mechanism.

The support plate preferably runs along the z-direction. The support plate can be welded or bolted to the vertical profile.

According to a further embodiment, the shovel element of the first shovel mechanism and the shovel element of the second shovel mechanism are attached to the support plate by means of at least one bolt.

Preferably, there are provided two bolts. The support plate has at least one bore or breakthrough through which the at least one bolt is guided. Preferably, there are provided two breakthroughs in the support plate. The shovel elements have corresponding bores or breakthroughs through which the bolt or the bolts are guided. The bolt can be a screw.

According to a further embodiment, each shovel element comprises an outer arm section and an inner arm section, wherein the support plate is sandwiched between the inner arm sections.

Each shovel element has a base section. The arm sections are bent in relation to the base section. At each end of the base section, one of the arm sections is provided. This results in the afore-mentioned C-shape of the shovel elements. The shovel elements can be made of bent metal sheets.

According to a further embodiment, the at least one bolt is guided through the inner arm sections and the support plate.

The inner arm sections have bores or breakthroughs for receiving the at least one bolt. For example, each inner arm section has two breakthroughs.

According to a further embodiment, the bolt gripper further comprises several distance elements, wherein at least one distance element is sandwiched between the support plate and the shovel element of the first shovel mechanism, and wherein at least one distance element is sandwiched between the support plate and the shovel element of the second shovel mechanism for bringing the bolt gripper from the folded status into the unfolded status.

The distance elements can be washers or the like. By means of the distance elements, a distance or space between the shovel elements can be adjusted. The distance elements are arranged between the inner arm sections and the support plate.

According to a further embodiment, each shovel element comprises a first support section, which is bent toward the outer arm section, and a second support section, which is bent toward the inner arm section, wherein the first support section carries a first pad, and wherein the second support section carries a second pad.

Preferably, the support sections are arranged perpendicular toward the arm sections. The pads can be bolted to the support sections. The pads can be replaced. For example, replacing the pads can be necessary for maintenance reasons.

According to a further embodiment, the first pad and/or the second pad is made of a plastic material.

For example, the pads are made of polyoxymethylene (POM), polytetrafluoroethylene (PTFE), or the like. This improves the sliding properties. The bolts rest on the pads when being received in the bolt gripper.

According to a further embodiment, the bolt gripper further comprises a lock mechanism for locking the first bolt in the first shovel mechanism and for locking the second bolt in the second shovel mechanism.

The lock mechanism prevents the bolts from falling out of the shovel mechanism. Preferably, the lock mechanism comprises a notch that is provided in the support plate and runs along the y-direction. The lock mechanism further comprises a lock plate that is guided in the notch and a lock wire for moving the lock plate along the notch. The lock plate can engage with an undercut that is provided at an upper end of the notch. The lock plate can be exchanged.

According to a further embodiment, the bolt gripper can be steplessly adjusted between the folded status and the unfolded status.

In other words, there is provided an arbitrary number of intermediate statuses or positions between the folded status and the unfolded status. Adjustment can be done by the distance elements as explained before. Distance elements of varying thicknesses can be provided for this purpose.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a perspective view of a wind turbine according to one embodiment;
- Fig. 2: shows a perspective view of a wind turbine rotor blade according to one embodiment;
- Fig. 3: shows cross sectional view of a bolt according to one embodiment;
- Fig. 4: shows a schematic isometric view of a bolt gripper according to one embodiment;
- Fig. 5: shows a schematic top view of the bolt gripper according to Fig. 4;
- Fig. 6: shows a further schematic top view of the bolt gripper according to Fig. 4;
- Fig. 7: shows a schematic side view of a support plate according to one embodiment;
- Fig. 8: shows a schematic top view of a distance element according to one embodiment;
- Fig. 9: shows a schematic isometric view of a use case for using the bolt gripper according to Fig. 4;
- Fig. 10: shows a further schematic isometric view of the use case according to Fig. 9;
- Fig. 11: shows a further schematic isometric view of the use case according to Fig. 9; and
- Fig. 12: shows a further schematic isometric view of the use case according to Fig. 9.

In the Figures, like reference numerals designate like or functionally equivalent elements, unless otherwise indicated.

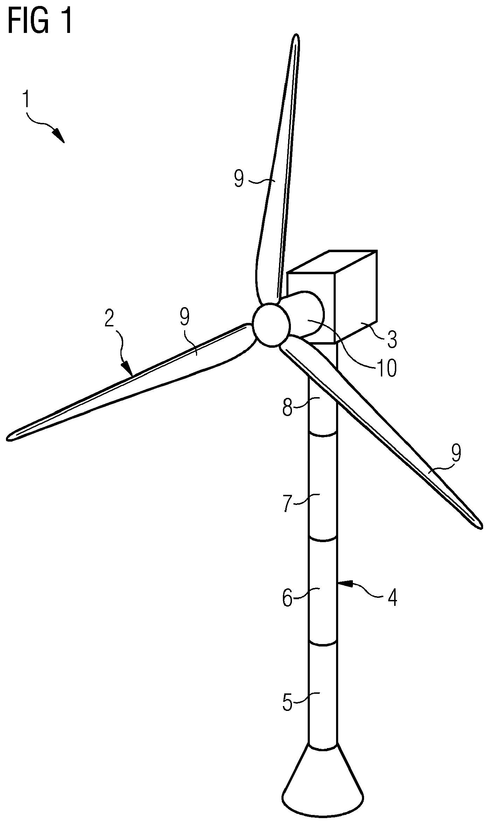

Fig. 1 shows a wind turbine 1 according to one embodiment.

The wind turbine 1 is an offshore wind turbine. The wind turbine 1 comprises a rotor 2 connected to a generator (not shown) arranged inside a nacelle 3. The nacelle 3 is arranged at the upper end of a tower 4 of the wind turbine 1. The tower 4 can be named wind turbine tower.

The tower 4 has a plurality of tower sections 5 to 8 that are arranged on top of each other. The tower sections 5 to 8 comprise flanges that are connected to each other by means of bolts to form the tower 4. The tower sections 5 to 8 can be identical. However, the tower sections 5 to 8 can also be different from each other.

The rotor 2 comprises three rotor blades 9. The rotor blades 9 are connected to a hub 10 of the wind turbine 1. Rotors 2 of this kind may have diameters ranging from, for example, 30 to 160 meters or even more. The rotor blades 9 are subjected to high wind loads. At the same time, the rotor blades 9 need to be lightweight. For these reasons, rotor blades 9 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

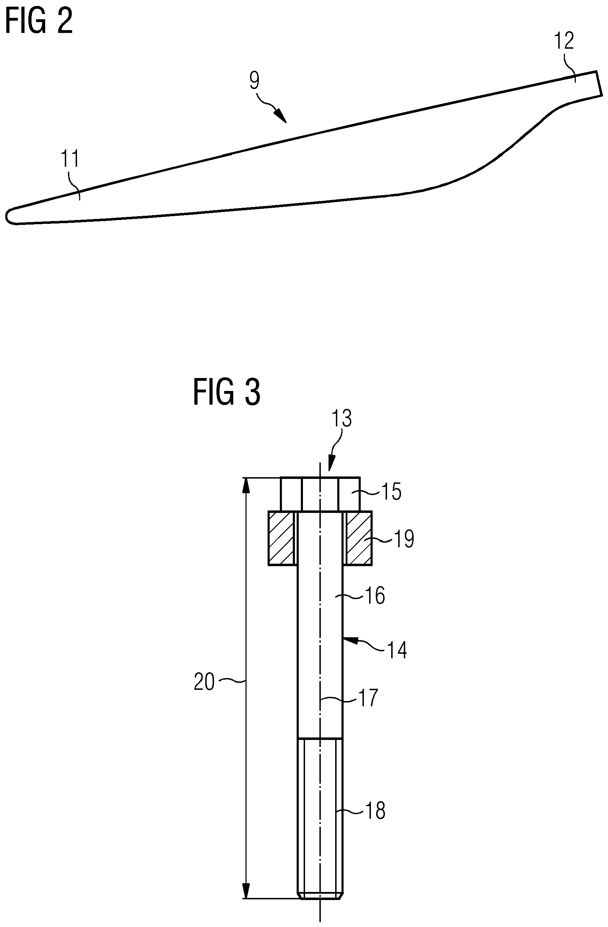

Fig. 2 shows a rotor blade 9 according to one embodiment.

The rotor blade 9 comprises an aerodynamically designed portion 11, which is shaped for optimum exploitation of the wind energy and a blade root 12 for connecting the rotor blade 9 to the hub 10.

Fig. 3 shows a bolt 13 according to one embodiment.

A plurality of bolts 13 is used to connect the tower sections 5 to 8 together to form the tower 4. In the following, only one bolt 13 will be referred to. The bolt 13 comprises a bolt element 14. The bolt element 14 can be a screw or the like. The bolt element 14 comprises a bolt head 15. The bolt head 15 can have a hexagonal shape.

A bolt shaft 16 protrudes from the bolt head 15. The bolt shaft 16 is designed to be rotation symmetric toward an axis of symmetry 17 of the bolt 13. A thread 18 is provided at an end of the bolt shaft 16 that faces away from the bolt head 15. The bolt shaft 16 is guided through a washer 19 that abuts the bolt head 15.

The bolt 13 can have a length 20 of 300 to 500 mm and a weight of up to 30 kg or even more. Due to these dimensions of the bolt 13, it is difficult to handle the bolt 13 manually on a construction site where the tower 4 has to be assembled or disassembled.

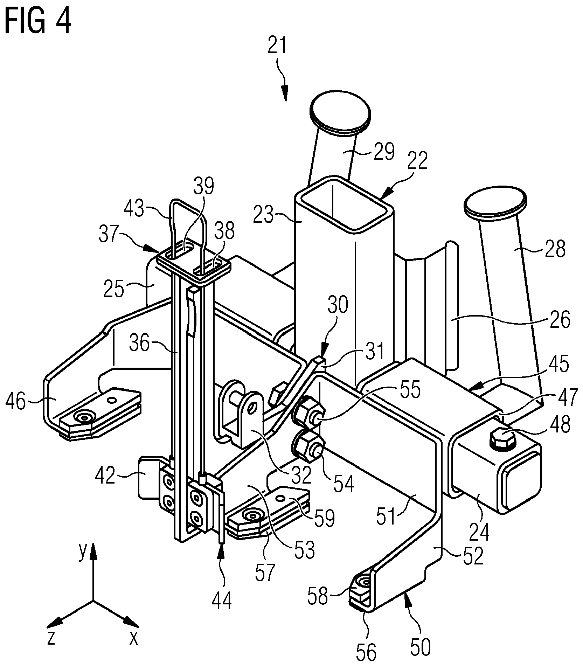

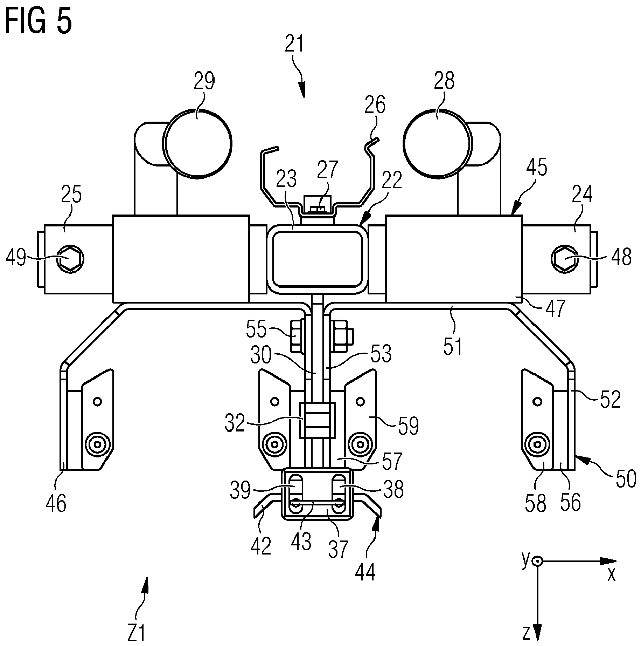

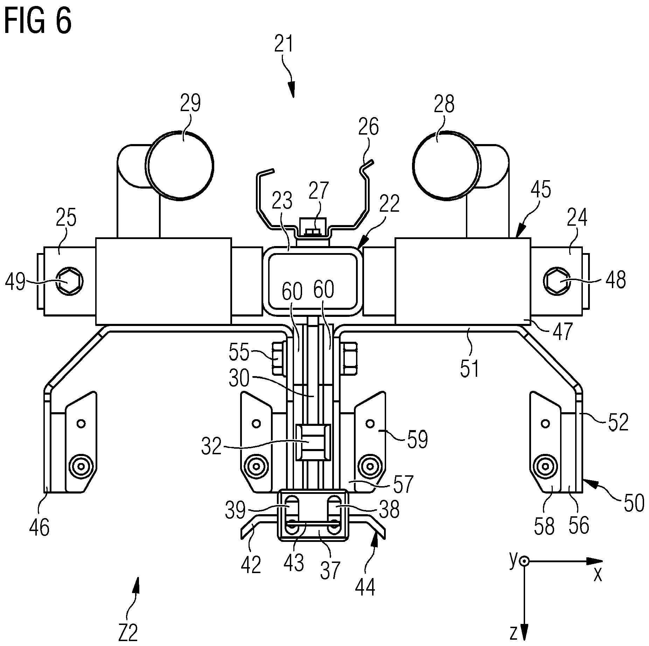

Fig. 4 shows a perspective view of an adjustable bolt gripper 21 according to one embodiment. Figs. 5 and 6 both show top views of the bolt gripper 21. In the following, Figs. 4 to 6 will be referred to at the same time.

The bolt gripper 21 is designed to handle at least one bolt 13 as describes before. Preferably, the bolt gripper 21 is designed to carry or handle two bolts 13 at the same time. The handling of the bolt 13 or the bolts 13 is done winch-assisted or crane-assisted as will be explained in detail later.

The bolt gripper 21 has a coordinate system comprising a width direction or x-direction x, a height direction or y-direction y and a depth direction or z-direction z. The directions x, y, z are arranged perpendicular to each other. The bolt gripper 21 comprises a T-shaped frame 22. The frame 22 has a vertical profile 23 that runs along the y-direction y. The vertical profile 23 can be a hollow steel or aluminum profile with a rectangular cross-section.

Two horizontal profiles 24, 25 are attached to the vertical profile 23 to form a reversed T-shaped geometry of the frame 22. There are provided a first horizontal profile 24 and a second horizontal profile 25. The horizontal profiles 24, 25 run along the x-direction x. The vertical profile 23 is sandwiched between the two horizontal profiles 24, 25. The horizontal profiles 24, 25 are firmly attached to the vertical profile 23. The horizontal profiles 24, 25 are bolted or welded to the vertical profile 23. The horizontal profiles 24, 25 can both be a hollow steel or aluminum profile with a rectangular cross-section.

In the orientation of Figs. 4 to 6 at a back side of the vertical profile 23, a holder 26 for holding a winch remote control (not shown) is attached to the vertical profile 23. The holder 26 can be welded to the vertical profile 23. Alternatively, the holder 26 can be bolted to the vertical profile 23 by means of bolts 27 of which only one is shown in Figs. 5 and 6.

The holder 26 is sandwiched between two handles 28, 29 that can be gripped by an operator for operating the bolt gripper 21. The handles 28, 29 can be firmly attached to the horizontal profiles 24, 25. The handles 28, 29 can be bolted or welded to the horizontal profiles 24, 25. The handle 28 can be attached to the first horizontal profile 24. The handle 29 can be attached to the second horizontal profile 25. The handles 28, 29 have a circular cross-section. The handles 28, 29 can be made of a steel or aluminum tube.

Facing away from the holder 26, a support plate 30 is attached to the vertical profile 23. The support plate 30 is part of the frame 22. The support plate 30 protrudes from the vertical profile 23 along the z-direction z. The support plate 30 can be bolted or welded to the vertical profile 23.

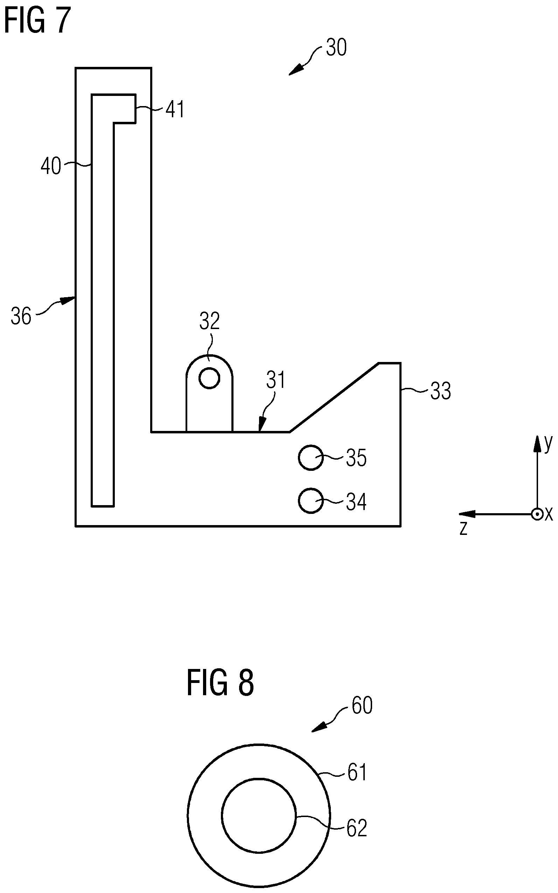

Fig. 7 shows the support plate 30 according to one embodiment.

The support plate 30 has a base section 31 that carries an eyelet 32 that can receive a hook from a winch or crane (not shown). The base section 31 is plate-shaped and comprises a face 33 that is attached to the vertical profile 23. Two breakthroughs 34, 35 in the form of bores are provided at the base section 31. The base section 31 runs along the z-direction z.

The support plate 30 has a L-shaped geometry and comprises the afore-mentioned base section 31 that runs along the z-direction z and a lock section 36 that runs along the y-direction y. On top of the lock section 36, an end plate 37 (Fig. 4) is attached to the lock section 36. The end plate 37 can be welded to the lock section 36. The end plate 37 has two breakthroughs 38, 39. The lock section 36 of the support plate 30 comprises a notch 40 that runs along the y-direction y. At an upper end of the notch 40, an undercut 41 is provided. The undercut 41 is part of the notch 40.

A lock plate 42 is guided in the notch 40 along the y-direction y. The lock plate 42 is exchangeable. A lock wire 43 is connected to the lock plate 42 and guided through the breakthroughs 38, 39 of the end plate 37. The notch 40, the lock plate 42 and the lock wire 43 together form a lock mechanism 44 of the bolt gripper 21.

The function of the lock mechanism 44 will be explained in the following. Fig. 4 shows the lock mechanism 44 in a locked position or status. In the locked status, the lock plate 42 is positioned at a lower end of the notch 40 of the support plate 30. To unlock the lock mechanism 44, the lock wire 43 is pulled upwards along the y-direction y. The lock plate 42 is thus moved upwards along the notch 40 until the lock plate 42 or a part of the lock plate 42 engages with the undercut 41. The lock plate 42 is now held in position by means of the undercut 41. The lock mechanism 44 is now in an unlocked status.

To lock the lock mechanism 44 again, the lock plate 42 is disengaged with the undercut 41 by means of the lock wire 43. As soon as the lock plate 42 is disengaged with the undercut 41, the lock plate 42 moves downwards along the notch 40 until the lock plate 42 reaches a lower end of the notch. Moving down the lock plate 42 is done by gravity. The lock mechanism 44 is now back in the locked status thereof.

Now turning back to Figs. 4 to 6, the bolt gripper 21 comprises two shovel mechanisms 45, 46. There are provided a first shovel mechanism 45 and a second shovel mechanism 46. The shovel mechanisms 45, 46 are identical, but mirror-inverted in design. Thus, in the following only the first shovel mechanism 45 will be referred to.

The first shovel mechanism 45 comprises a slide profile 47 that is guided along the first horizontal profile 24. The slide profile 47 can be a hollow and rectangular steel or aluminum profile. The first horizontal profile 24 is arranged inside the slide profile 47. The slide profile 47 can be moved along the x-direction x in relation to the first horizonal profile 24. A bolt 48, 49 can be provided on each horizontal profile 24, 25 to limit the movement of the shovel mechanisms 45, 46 along the horizontal profiles 24, 25. There are provided a first bolt 48 and a second bolt 49. Each slide profile 47 can have a cutout for one of the handles 28, 29.

A shovel element 50 is attached to a front side of the slide profile 47. The shovel element 50 can be a bent steel or aluminum sheet. The shovel element 50 comprises a plate-like base section 51 that is firmly attached to the slide profile 47. The base section 51 can be bolted or welded to the slide profile 47. An outer arm section 52 and an inner arm section 53 protrude from the base section 51. Thus, the shovel element 50 has a C-shaped geometry.

The inner arm section 53 is attached to the support plate 30 by means of two bolts 54, 55. The bolts 54, 55 are guided through the breakthroughs 34, 35 of the support plate 30. The inner arm section 53 has breakthroughs that receive the bolts 54, 55. The second shovel mechanism 46 is also attached to the support plate 30 by means of the bolts 54, 55.

A support section 56, 57 protrudes from each arm section 52, 53. A first support section 56 protrudes from the outer arm section 52. A second support section 57 protrudes from the inner arm section 53. The support sections 56, 57 are arranged perpendicular to the arm sections 52, 53. Each support section 56, 57 carries a pad 58, 59. There are provided a first pad 58 and a second pad 59. The pads 58, 59 can be bolted to the support sections 56, 57. The pads 58, 59 can be made of a plastic material. For example, the pads 58, 59 are made of polyoxymethylene (POM), polytetrafluoroethylene (PTFE), or the like.

Fig. 8 shows a distance element 60 according to one embodiment.

The distance element 60 is part of the bolt gripper 21. The distance element 60 can be a washer or the like. In this case, the distance element 60 can have a circular outer contour 61. However, the contour 61 can have any arbitrary geometry. For example, the contour 61 can be rectangular. The distance element 60 has a breakthrough 62. One of the bolts 54, 55 can be guided through the breakthrough 62.

A plurality of distance elements 60 can be assigned to each bolt 54, 55. These distance elements 60 can have different thicknesses. The distance element 60 can have two breakthroughs 62, namely one breakthrough 62 for each bolt 54, 55. In this case, the distance element 60 can have a rectangular shape.

The functionality of the shovel mechanisms 45, 46 is explained in the following with reference to Figs. 5 and 6. Fig. 5 shows the bolt gripper 21 in an initial or folded status Z1. In the folded status Z1, the inner arm sections 53 of the shovel elements 50 of the two shovel mechanisms 45, 46 directly lie against the support plate 30 so that the support plate 30 is sandwiched between the inner arm sections 53. The bolts 54, 55 clamp the inner arm sections 53 and the support plate 30 together.

Fig. 6 shows the bolt gripper 21 in an extended or unfolded status Z2. The unfolded status Z2 differs from the folded status Z1 in that the shovel mechanisms 45, 46 are slid outwards away from the support plate 30. In other words, the shovel mechanisms 45, 46 are spaced further apart from each other in the unfolded status Z2 than compared to the folded status Z1. To bring the bolt gripper 21 from the folded status Z1 into the unfolded status Z2, the bolts 54, 55 are removed.

Then the slide profiles 47 of the shovel mechanisms 45, 46 are moved along the horizontal profiles 24, 25 until the slide profiles 47 abut the bolts 48, 49. However, the sliding movement can be stopped before contacting the bolts 48, 49.

One or more distance elements 60 are placed between the support plate 30 and the two inner arm sections 53 of the shovel mechanisms 45, 46. A thickness of the distance elements 60 defines a distance between the two inner arm sections 53 of the shovel mechanisms 45, 46. After placing the distance elements 60, the bolts 54, 55 are tightened again to lock the shovel mechanisms 45, 46 again.

By using a plurality of distance elements 60 and/or using distance elements 60 of different thicknesses, it is possible to position the shovel mechanisms 45, 46 in any arbitrary position between the folded status Z1 and the unfolded status Z2. The bolt gripper 21 can thus be adjusted in a stepless way.

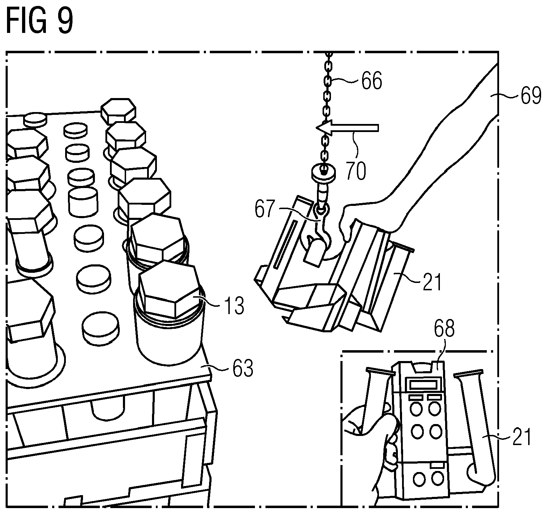

Figs. 9 to 12 shows the use of the bolt gripper 21. In the following, Figs. 9 to 12 will be referred to at the same time.

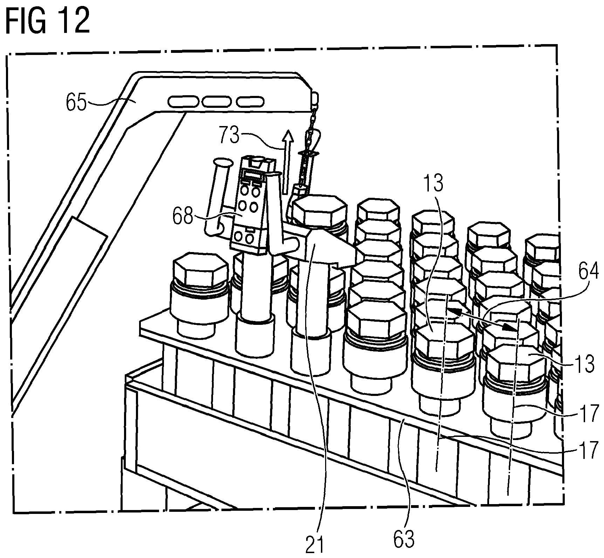

A plurality of bolts 13 is stored in a magazine 63. As can be seen in Fig. 12, the axes of symmetry 17 of two neighbored bolts 13 are spaced apart from each other in a distance 64. The distance 64 is preferably the same distance the axes of symmetry 17 have when the bolts 13 are used to bolt the tower sections 5 to 8 together. The distance 64 can be 144 to 180 mm or the like.

The bolt gripper 21 is adjusted to the distance 64 by sliding the shovel mechanisms 45, 46 sideways as explained before. The bolt gripper 21 is attached to a crane or winch 65 (Fig. 12) by means of a chain 66 and a hook 67 that is hooked into the eyelet 32. A remote control 68 is placed in the holder 26. Preparation of the lifting procedure is now finished.

An operator 69 moves the bolt gripper 21 toward the magazine 63 as indicated by an arrow 70 in Fig. 9. The remote control 68 is used to position the bolt gripper 21 at the right height level to grip two of the bolts 13.

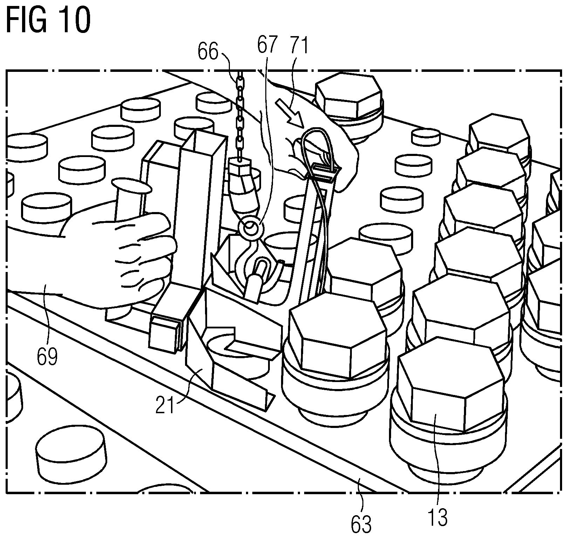

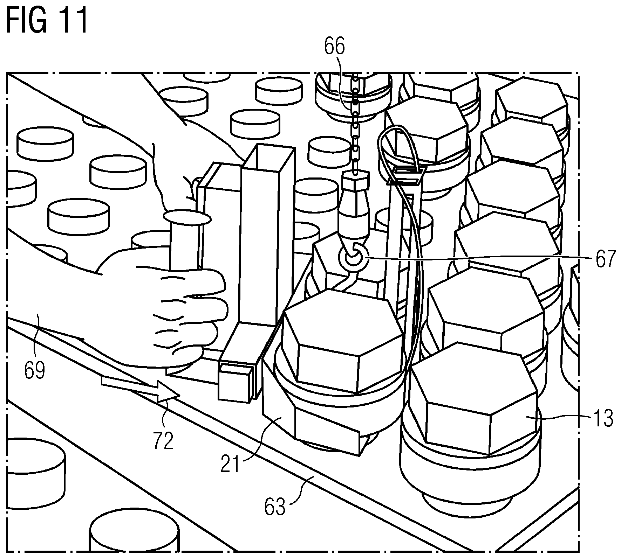

The lock mechanism 44 is unlocked by pulling the lock wire 43 as explained before. Then, the shovel elements 50, in particular the pads 58, 59, are pushed under the bolt heads 15 or the washers 19 of the bolts 13 as indicated by arrows 71, 72 in Figs. 10 and 11. A distance or space is provided between the magazine 63 and the bolt heads 15 or the washers 19 so that the pads 58, 59 can be placed between the magazine 63 and the bolt heads 15 or the washers 19.

As soon as the shovel elements 50 are fully engaged with two bolts 13, as can be seen in Fig. 11, the lock mechanism 44 is locked again by pulling the lock wire 43 that disengages the undercut 41 and the lock plate 42 so that the lock plate 42 moves down and locks the bolts 13 in the shovel mechanisms 45, 46. The bolts 13 are now securely fixed to the bolt gripper 21.

Then the bolts 13 can be lifted from the magazine 63 as indicated by an arrow 73 in Fig. 12. The bolts 13 can now be safely transported to an assembly area. Returning the bolts 13 to the magazine 63 can be done in an inverted procedure as explained before.

Although the present invention has been described in accordance with preferred embodiments, it is obvious for the person skilled in the art that modifications are possible in all embodiments.

## Claims

1. An adjustable bolt gripper (21) for gripping bolts (13) of a wind turbine (1), comprising a frame (22), a first shovel mechanism (45) to engage with a first bolt (13), a second shovel mechanism (46) to engage with a second bolt (13), wherein the first shovel mechanism (45) and the second shovel mechanism (46) are both slidably supported at the frame (22) for bringing the bolt gripper (21) from a folded status (Z1) into an unfolded status (Z2) and vice versa, and wherein the first shovel mechanism (45) and the second shovel mechanism (46) are positioned further away from each other in the unfolded status (Z2) than compared to the folded status (Z1).

2. The adjustable bolt gripper according to claim 1, wherein the frame (22) comprises a vertical profile (23), a first horizontal profile (24) and a second horizontal profile (25), wherein the vertical profile (23) is sandwiched between the first horizontal profile (24) and the second horizontal profile (25), wherein the first shovel mechanism (45) is slidably supported at the first horizontal profile (24), and wherein the second shovel mechanism (46) is slidably supported at the second horizontal profile (25).

3. The adjustable bolt gripper according to claim 2, wherein the first shovel mechanism (45) comprises a slide profile (47) that is slidably supported at the first horizontal profile (24), and wherein the second shovel mechanism (46) comprises a slide profile (47) that is slidably supported at the second horizontal profile (25).

4. The adjustable bolt gripper according to claim 3, wherein the slide profile (47) of the first shovel mechanism (45) receives the first horizontal profile (24), and wherein the slide profile (47) of the second shovel mechanism (46) receives the second horizontal profile (25).

5. The adjustable bolt gripper according to claim 4, wherein the first horizontal profile (24) comprises a first bolt (48) against which the slide profile (47) of the first shovel mechanism (45) lies in the unfolded status (Z2), and wherein the second horizontal profile (25) comprises a second bolt (49) against which the slide profile (47) of the second shovel mechanism (46) lies in the unfolded status (Z2).

6. The adjustable bolt gripper according to one of claims 3 - 5, wherein the first shovel mechanism (45) comprises a shovel element (50) that is attached to the slide profile (47) of the first shovel mechanism (45), and wherein the second shovel mechanism (46) comprises a shovel element (50) that is attached to the slide profile (47) of the second shovel mechanism (46).

7. The adjustable bolt gripper according to claim 6, wherein the frame (22) comprises a support plate (30) that is sandwiched between the shovel element (50) of the first shovel mechanism (45) and the shovel element (50) of the second shovel mechanism (46).

8. The adjustable bolt gripper according to claim 7, wherein the shovel element (50) of the first shovel mechanism (45) and the shovel element (50) of the second shovel mechanism (46) are attached to the support plate (30) by means of at least one bolt (54, 55).

9. The adjustable bolt gripper according to claim 8, wherein each shovel element (50) comprises an outer arm section (52) and an inner arm section (53), and wherein the support plate (30) is sandwiched between the inner arm sections (53).

10. The adjustable bolt gripper according to claim 9, wherein the at least one bolt (54, 55) is guided through the inner arm sections (53) and the support plate (30).

11. The adjustable bolt gripper according to one of claims 7 - 10, further comprising several distance elements (60), wherein at least one distance element (60) is sandwiched between the support plate (30) and the shovel element (50) of the first shovel mechanism (45), and wherein at least one distance element (60) is sandwiched between the support plate (30) and the shovel element (50) of the second shovel mechanism (46) for bringing the bolt gripper (21) from the folded status (Z1) into the unfolded status (Z2).

12. The adjustable bolt gripper according to claim 9, wherein each shovel element (50) comprises a first support section (56), which is bent toward the outer arm section (52), and a second support section (57), which is bent toward the inner arm section (53), wherein the first support section (56) carries a first pad (58), and wherein the second support section (57) carries a second pad (59).

13. The adjustable bolt gripper according to claim 12, wherein the first pad (58) and/or the second pad (59) is made of a plastic material.

14. The adjustable bolt gripper according to one of claims 1 - 13, further comprising a lock mechanism (44) for locking the first bolt (13) in the first shovel mechanism (45) and for locking the second bolt (13) in the second shovel mechanism (46).

15. The adjustable bolt gripper according to one of claims 1 - 14, wherein the bolt gripper (21) can be steplessly adjusted between the folded status (Z1) and the unfolded status (Z2) .
